# FASCICULE DE BREVET EUROPEEN

(11) **EP 3 278 930 B1**
(45) Date de publication et mention de la délivrance du brevet: **03.11.2021**
(21) Numéro de dépôt: 17183931.9
(22) Date de dépôt: 31.07.2017
(51) Int. Cl.: B25B 5/00, B25B 11/00, B60J 1/00, B62D 65/06

(54) **DISPOSITIF POUR LA POSE OU LA DÉPOSE D'UNE VITRE DE VÉHICULE AUTOMOBILE**
VORRICHTUNG ZUM EINSETZEN ODER HERAUSNEHMEN EINER GLASSCHEIBE EINES KRAFTFAHRZEUGS
DEVICE FOR INSTALLING OR REMOVING A MOTOR VEHICLE WINDOW PANE

(30) Priorité: 02.08.2016 FR 1657501
(43) Date de publication de la demande: 07.02.2018
(73) Titulaire: VBSA, 88310 Cornimont (FR)
(72) Inventeur: VIOLA, Cédric, 88290 SAULXURES SUR MOSELOTTE (FR)
(74) Mandataire: Hugues, Catherine

(56) Documents cités:
- US-A1- 2004 003 488
- US-A1- 2010 011 554

## Description

La présente invention a pour objet un dispositif pour la pose ou la dépose d'une vitre d'un véhicule automobile, telle qu'un pare-brise, comportant d'une part une potence formée par un mât dont l'extrémité inférieure est fixée sur un socle tandis que l'extrémité supérieure est solidaire d'une poutre rotative autour de l'axe dudit mât et d'autre part un ensemble de ventouses solidaires d'une barre ainsi que des moyens pour suspendre ladite barre à ladite poutre et des moyens de réglage en hauteur de ladite barre suspendue à ladite poutre.

Le dispositif divulgue dans le document US 2004/003488 A1 montre toutes les caractéristiques selon la préambule de la revendication 1.

De manière classique, un tel dispositif a pour vocation de permettre à un opérateur, d'effectuer seul, avec des efforts physiques les plus réduits possible, en toute sécurité et de manière précise, l'ensemble des opérations liées au montage ou au démontage d'une vitre d'un véhicule automobile, telle que par exemple un pare-brise, une lunette arrière, une vitre de toit panoramique ou toute autre vitre de véhicule automobile.

Il a été constaté que les dispositifs de ce type dont disposent les professionnels actuellement ne donnent pas toujours entière satisfaction. En effet, étant donné qu'ils sont généralement stockés en pièces détachées ou rabattues vers une position de rangement, certains d'entre eux peuvent supposer de nombreuses interventions manuelles de la part de l'opérateur en vue de procéder à l'assemblage de leurs différents éléments constitutifs, dont certains sont relativement lourds, puis à des réglages successifs fastidieux et chronophages destinés à placer ces éléments dans une configuration dans laquelle le dispositif est adapté aussi bien au type de véhicule et de vitre, qu'aux besoins de l'opérateur. Ceci a pour inconvénient de nécessiter à la fois un temps de préparation considérable et des efforts physiques non négligeables pour le technicien, avec en outre un résultat pas toujours satisfaisant.

Par ailleurs, il s'est avéré qu'à l'usage de tels dispositifs ne permettent pas de pallier entièrement le caractère fastidieux des opérations de montage ou de démontage de la vitre considérée. Les efforts à fournir par l'opérateur demeurent trop importants, en particulier pour accompagner la vitre lors des différents changements de position qu'elle est susceptible de subir en vue de son montage ou lors de son démontage.

Ainsi, par exemple, lors du montage, la vitre doit être retournée après fixation des ventouses, notamment pour permettre l'application de colle et/ou pour l'amener, via plusieurs pivotements additionnels selon différents axes, dans une position adéquate en regard du cadre délimitant le logement à l'intérieur duquel elle doit être installée au niveau du véhicule considéré.

La structure des dispositifs utilisés actuellement pour le montage ou le démontage d'une vitre d'un véhicule automobile ne permet pas une mise en œuvre automatisée et quasi autonome de ces différentes étapes nécessaires au positionnement souhaité de ladite vitre, soit par rapport au véhicule, soit par rapport à un emplacement de stockage. Ces étapes supposent donc nécessairement un investissement physique important de la part de l'opérateur qui, bien que la vitre est suspendue à la potence au cours d'au moins une partie des étapes, se doit néanmoins encore de la manœuvrer de manière répétée pour la tirer ou la pousser vers les différentes directions requises. De ce fait, de nombreux opérateurs peuvent être amenés à être sollicités physiquement de manière exagérée et finissent souvent par se plaindre de douleurs au dos.

Afin de solutionner en partie cette problématique, il est courant d'utiliser, en complément d'un dispositif de pose ou de dépose de vitres de véhicule automobile tel que décrit en préambule, une table de retournement. Cette dernière permet à un opérateur de s'affranchir au moins en partie des difficultés liées à l'étape de retournement de la vitre. Néanmoins, une telle solution implique un investissement financier supplémentaire pour l'entreprise de réparation de vitres de véhicules automobiles. En outre, elle présente également l'inconvénient d'augmenter l'encombrement général du dispositif de pose et de dépose, nécessitant de disposer d'un espace de travail ou de stockage de volume important, ce qui peut poser problème dans certains ateliers de surface réduite, notamment du fait qu'ils situés en centre-ville.

La présente invention a par conséquent pour objectif de pallier les différents inconvénients mentionnés ci-dessus en proposant un dispositif de pose et de dépose d'une vitre d'un véhicule automobile qui soit à même de supporter le poids de ladite vitre et qui assure également, de préférence de manière automatisée, l'ensemble des étapes nécessaires au positionnement adéquat de ladite vitre à l'emplacement souhaité, de sorte qu'un seul opérateur puisse en effectuer le montage ou le démontage tout seul, sans avoir à fournir un effort physique à cet effet, de sorte que son dos soit préservé. Par ailleurs, un autre but de l'invention est également de procurer une solution pour réduire le coût d'un tel dispositif ainsi que son encombrement, de manière à faciliter son stockage et permettre sa mise en œuvre aisée au sein d'un espace de dimensions, le cas échéant, limitées.

Afin d'atteindre les buts fixés ci-dessus, la présente invention propose un dispositif de pose et de dépose d'une vitre d'un véhicule automobile, telle qu'un pare-brise, du genre indiqué en préambule, caractérisé en ce qu'il comporte des moyens de solidarisation temporaire de ladite barre audit mât et en ce que lesdites ventouses sont montées en rotation sur ladite barre autour de l'axe de ladite barre et autour d'un axe perpendiculaire à l'axe de ladite barre.

D'autres caractéristiques et avantages de l'invention ressortiront de la description détaillée qui va suivre se rapportant à un exemple de réalisation du dispositif de pose et de dépose d'une vitre de véhicule automobile selon l'invention donné uniquement à titre indicatif et non limitatif.

La compréhension de cette description sera facilitée en se référant aux dessins joints, dans lesquels :
- La figure 1 illustre une vue en perspective d'un dispositif selon l'invention en position d'utilisation, dans lequel le tronçon supérieur du mât télescopique est complètement déployé par rapport au tronçon inférieur, et l'ensemble de ventouses est orienté en direction du sol,
- La figure 2 illustre une vue de côté du dispositif de la figure 1 dans lequel l'ensemble de ventouses est orienté en direction de la poutre rotative,
- La figure 3 est une vue de côté du dispositif de la figure 1 dans lequel le tronçon supérieur du mât télescopique est escamoté dans le tronçon inférieur,
- La figure 4 illustre une vue en coupe du dispositif de la figure 3,
- La figure 5 est une vue agrandie du détail C de la figure 4,
- La figure 6 est une vue agrandie du détail B de la figure 4,
- La figure 7 illustre une vue en perspective du dispositif selon l'invention en position de rangement,
- La figure 8 représente une vue en coupe selon AA du socle que comporte le dispositif de la figure 1, et
- La figure 9 illustre une vue en perspective d'une variante de réalisation de la barre que comporte le dispositif selon l'invention,
- La figure 10 est une vue de dessus d'une autre variante de réalisation de l'ensemble de ventouses que peut comporter le dispositif selon l'invention,
- La figure 11 est une vue de dessous partiellement en coupe de l'ensemble illustré à la figure 10, et
- Les figures 12 et 13 illustrent des vues partielles d'une variante de réalisation du dispositif selon l'invention dans laquelle le socle est muni d'une paire de roulettes, respectivement en position d'utilisation du dispositif et en position de déplacement du dispositif le long d'un sol.

Dans la variante de réalisation illustrée aux figures, le dispositif 1 selon l'invention pour la pose ou la dépose d'une vitre, telle que notamment un pare-brise d'un véhicule automobile comporte de manière classique une potence réalisée en un matériau métallique, par exemple en aluminium ou en un matériau présentant des propriétés équivalentes.

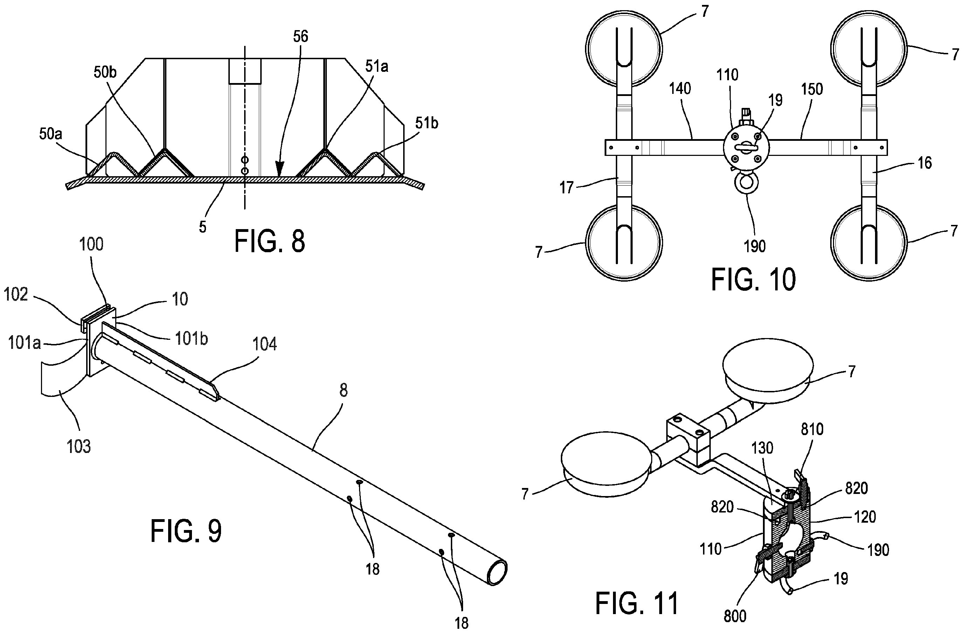

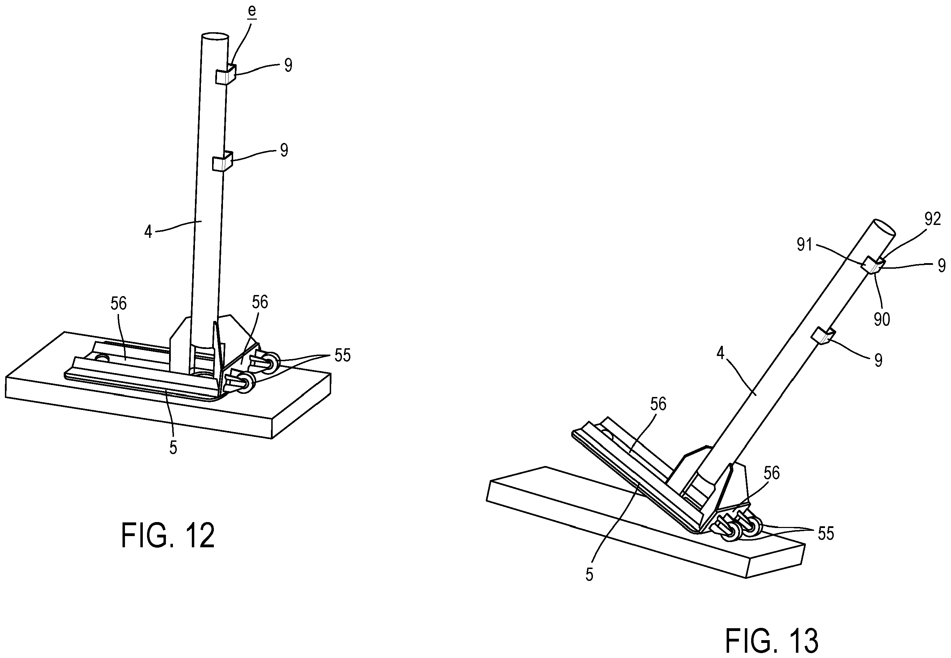

Elle est formée par un mât 4 tubulaire dont l'extrémité inférieure 40 est fixée, de préférence de manière amovible, ou le cas échéant de manière fixe par exemple par soudure, sur un socle comportant une plaque 5, de préférence monobloc, destinée à reposer au sol. Il convient de noter que le socle est de préférence équipé d'au moins une paire de roulettes 55 (cf. figs 12 et 13) fixées préférentiellement sur une face latérale 56 s'étendant du côté du mât 4, perpendiculairement à la plaque 5, de sorte à faciliter le déplacement du dispositif selon l'invention. La plaque 5 est apte à former avec ledit mât 4 une structure en « L », sur laquelle peut venir en appui un pneu du véhicule lors de la mise en œuvre du dispositif 1 afin de bloquer celui-ci en position lors des étapes de montage ou de démontage du pare-brise. Lorsque le pneu considéré du véhicule est positionné sur la plaque 5, il est lui-même calé entre deux bords opposés 50, 51 de la plaque 5, lesdits bords 50, 51 formant un, ou plusieurs bourrelets 50a, 50b, 51a, 51b (cf. fig. 8) par rapport au fond de la plaque 5 et par conséquent des moyens pour caler ledit pneu.

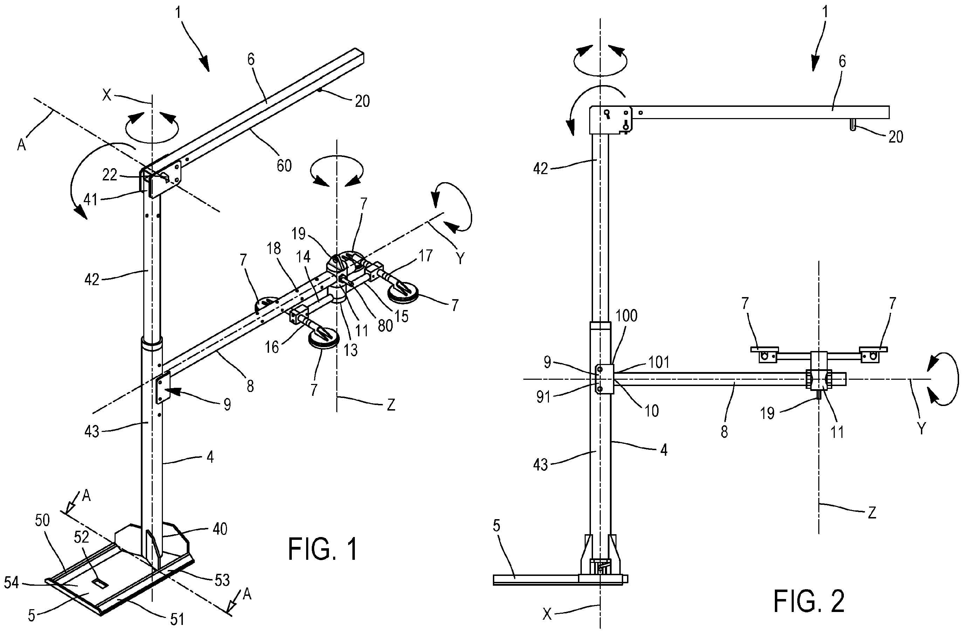

La potence comporte également une poutre 6, montée en rotation à 360° autour de l'axe X dudit mât 4, sur l'extrémité supérieure 41 de ce dernier. Lors de l'utilisation du dispositif 1, la poutre 6 s'étend selon un axe perpendiculaire à l'axe X du mât 4. Par ailleurs, dans cette position d'utilisation, la poutre 6 est prévue apte à adopter différentes positions, parmi lesquelles une première position dans laquelle elle s'étend depuis le mât 4 vers une direction opposée à celle vers laquelle s'étend la plaque 5 (cf. figures 1-4), et une position (non illustrée) dans laquelle elle s'étend depuis le mât 4 vers la même direction que la plaque 5, et est alors située au-dessus de celle-ci.

Par ailleurs, le dispositif 1 selon l'invention comporte également de manière classique un ensemble de quatre ventouses 7 solidaires d'une barre 8, ainsi que des moyens pour suspendre cette dernière à la poutre 6 et des moyens de réglage en hauteur de la barre 8 lorsqu'elle est suspendue à la poutre 6 qui seront décrits plus en détails ci-dessous.

L'invention prévoit par ailleurs que le dispositif 1 comporte des moyens de solidarisation temporaire de la barre 8 au mât 4, de manière telle qu'elle s'étende perpendiculairement à ce dernier en-dessous de la poutre 6 placée dans la première position mentionnée ci-dessus (figures 1 à 4). De plus, les ventouses 7 sont montées en rotation sur la barre 8 autour de l'axe Y de la barre 8 et autour d'un axe Z perpendiculaire à l'axe Y de la barre 8 (cf. fig. 1 et 2).

Comme il ressortira plus clairement de la description qui sera faite ci-après de la mise en œuvre du dispositif 1 selon l'invention, une telle caractéristique permet de disposer d'une table de retournement faisant partie intégrante du dispositif 1 lorsque la barre 8 est fixée sur le mât 4. Ainsi, lors de son intervention, le technicien bénéficie avantageusement de l'assistance d'une table de retournement, sur la base d'un encombrement correspondant uniquement à celui de la potence et permettant donc d'effectuer les différentes démarches de montage ou de démontage d'une vitre de véhicule automobile dans un espace le plus limité possible.

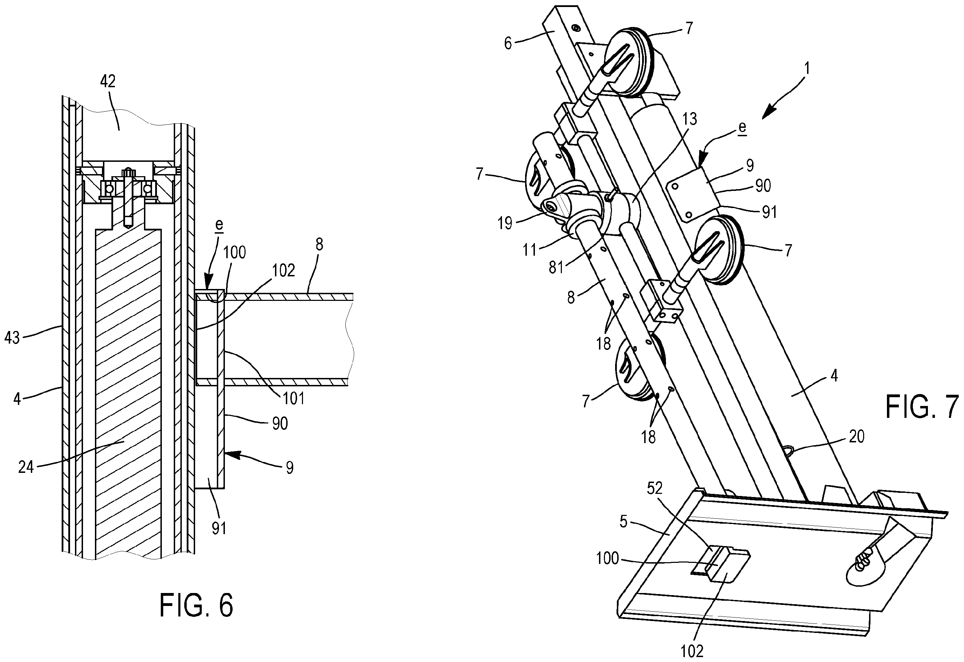

Dans la variante de réalisation illustrée aux figures, les moyens de solidarisation temporaire de la barre 8 au mât 4 comportent une première platine en « U » 9 présentant une paroi avant 90 et deux parois latérales opposées 91 fixées au mât 4 de manière à ménager un espace e entre la paroi avant 90 et le mât 4 (cf. figures 6 et 7), et une seconde platine en « U » 10 présentant une paroi supérieure 100 et deux parois latérales opposées 101, 102 dont une, ici la paroi 101, qui est fixée à une extrémité de la barre 8 (cf. figures 2, 4, 6, 7 et 9). Par ailleurs, la face interne de la paroi avant 90 de la première platine 9 et la paroi latérale libre 102 de la seconde platine 10 sont pourvues de moyens d'emboîtement complémentaires. Ces derniers peuvent être par exemple définis par une rainure formée dans la face interne de la paroi avant 90 de la première platine 9 de largeur adaptée pour y permettre l'emboîtement de la paroi latérale 102 libre de la seconde platine 10 reliée à la barre 8. En d'autres termes, la première platine en « U » 9 forme un logement solidaire du mât 4 servant à recevoir la paroi libre 102 de la seconde platine en « U » 10 que la barre 8 comporte, afin d'accrocher la barre 8 de manière amovible sur ledit mât 4. Ce logement peut être simplement défini par l'espace e s'étendant entre la paroi avant 90 de la platine 9 et le mât 4 ou par cet espace et une rainure formée dans la face interne de la paroi avant 90 de la platine 9.

En somme, une solidarisation temporaire de la barre 8 au mât 4 peut être réalisée très rapidement en accrochant la seconde platine 10 sur la première platine 9, par simple introduction de la paroi latérale libre 102 de la seconde platine 10 dans l'espace libre e compris entre le mât 4 et la paroi avant 90 de la première platine 9 et en faisant coulisser en direction de la plaque 5 cette même paroi latérale 102 dans la rainure que comporte éventuellement la face interne de la paroi avant 90 de la première platine 9. De même, une désolidarisation entre la barre 8 et le mât 4 s'effectue très rapidement et sans outil tout simplement en extrayant la paroi latérale libre 102 de la seconde platine 10 solidaire de la barre 8 de la rainure que comporte l'espace e s'étendant entre la première platine 9 solidaire du mât 4 et ce dernier.

Dans la variante de réalisation de la barre 8 illustrée à la figure 9, la seconde platine 10 comporte de surcroît deux ailes 103, prolongeant les bords latéraux 101a, 101b opposés de sa paroi latérale 101. Ces ailes 101a, 101b sont conformées (elles sont ici arquées) et dimensionnées de manière telle qu'elles peuvent venir épouser la paroi périphérique du mât 4, au voisinage de la première platine 9, lors de l'opération d'accrochage de la barre 8 sur celui-ci. Les deux ailes 101a, 101b jouent ainsi le rôle de moyens de guidage pour l'opérateur effectuant cette manœuvre qui s'en trouve ainsi facilitée et accélérée. Il convient de noter que dans cette variante, la barre 8 comporte également un aileron de renfort 104 s'étendant le long de sa paroi externe dans un plan parallèle à son axe Y, sur une certaine longueur depuis la seconde platine 10.

Par ailleurs, conformément à une autre variante de réalisation (visible aux figures 12 et 13) du dispositif selon l'invention, le mât 4, de longueur alors adaptée, peut être équipé de plusieurs platines 9, par exemple deux platines 9, fixées à différentes hauteurs. Ceci permet d'élargir le champ d'utilisation du dispositif selon l'invention, pouvant alors être envisagé dans le cadre du remplacement de parebrises de véhicules de type légers, et également de type utilitaires par exemple.

Dans la variante de réalisation illustrée aux figures 1-5 et 7, les ventouses 7 du dispositif 1 selon l'invention sont reliées à la barre 8 au moyen d'un manchon en « T » 11 dont celle-ci est équipée. Avantageusement, le manchon en « T » 11 est monté à la fois en rotation à 360° autour de l'axe Y de la barre 8 et en translation le long de cet axe Y.

De plus, le manchon 11 est apte à être bloqué en position par rapport à la barre 8, par exemple au moyen d'un doigt d'indexage 80 coopérant avec un trou choisi parmi une pluralité de trous 18 s'étendant le long et autour de la barre 8.

En fait, tel que visible sur les figures 1 et 7, plusieurs séries de quatre trous 18 s'étendent de manière échelonnée le long de la barre 8, tandis que dans chaque série, les trous 18 s'étendent radialement autour de la barre 8, et sont à chaque fois espacés d'un quart de tour.

Ainsi, le manchon 11 peut être déplacé en translation le long de la barre 8, en fonction des besoins, en vue d'être positionné à une certaine distance des extrémités de la barre 8, au niveau d'une série de quatre trous 18. Une fois cette position choisie, l'opérateur a encore la possibilité de faire pivoter le manchon 11 autour de la barre 8 avant de l'immobiliser dans l'une des quatre positions déterminées par les quatre trous 18 de la série sélectionnée.

Par ailleurs, le manchon 11 comporte une branche 12, d'axe Z perpendiculaire à l'axe Y de la barre 8, et sur laquelle est montée en rotation à 360° autour de l'axe Z un plot cylindrique 13. Celui-ci peut être bloqué en différentes positions, par exemple au moyen d'un doigt d'indexage 81 coopérant avec un trou 82 d'une série de trous formés autour de la circonférence de la branche 12. Par ailleurs, le plot cylindrique 13 porte une tige perpendiculaire à l'axe du plot 13, montée en rotation par rapport au plot 13 autour d'un axe Y1 parallèle à l'axe Y (flèches F1, F2) et dont les extrémités libres forment des bras 14, 15 portant respectivement une paire de ventouses 7 s'étendant chacune de part et d'autre d'une tige 16, 17 perpendiculaire à l'axe des bras 14, 15.

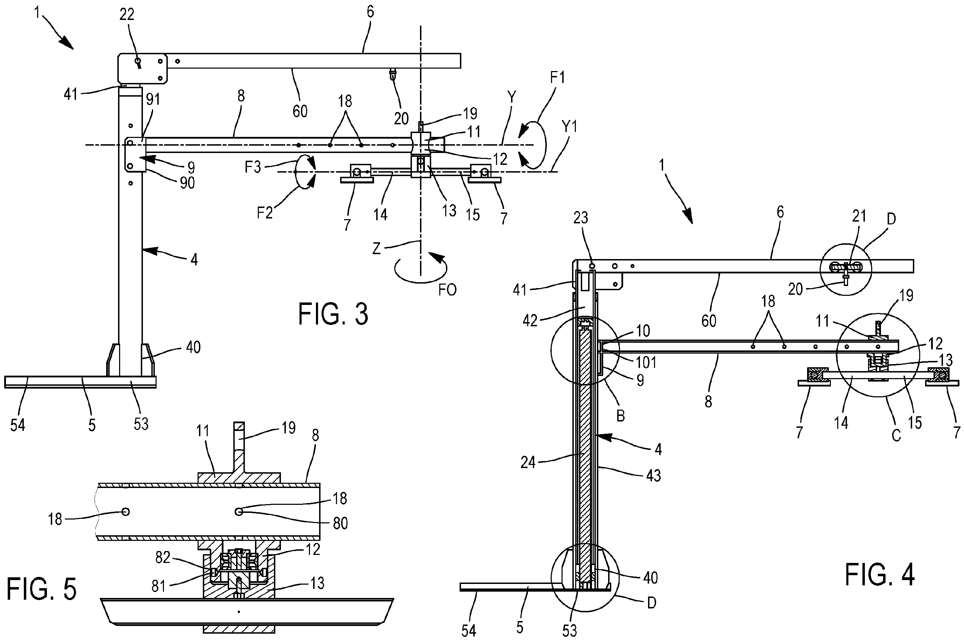

Ainsi, les ventouses 7 portées par la barre 8 peuvent être déplacées en translation le long de la barre 8, en suivant le mouvement de translation du manchon 11, notamment en vue d'être placées sur la barre 8 de manière adaptée à la taille de la vitre à manipuler et du véhicule concerné. Par ailleurs, elles peuvent être déplacées en rotation à 360° autour de l'axe Z de la branche 12, perpendiculaire à l'axe Y de la barre 8, en suivant le mouvement de rotation du plot cylindrique 13 (cf. flèche F0 à la fig. 3). Elles peuvent également être déplacées en rotation à 360° autour de l'axe Y de la barre 8, en suivant un mouvement de rotation infligé au manchon en « T » 11 par un opérateur (cf. flèche F1). Enfin, elles peuvent encore pivoter par rapport au plot cylindrique 13 dans un sens ou dans un autre autour d'un axe Y1 parallèle à l'axe Y (flèches F1, F2). D'autre part, afin de pouvoir suspendre la barre 8 à la poutre 6, l'invention a prévu, dans la variante de réalisation illustrée aux figures 1 à 5 et 7, d'équiper le manchon 13 d'un œillet 19 s'étendant dans un plan parallèle à l'axe Z de sa branche 12. Dans le même but, la face inférieure 60 de la poutre 6 comporte un crochet 20 pouvant être relié à l'œillet 19 au moyen d'une sangle.

Il convient de noter que dans la variante de réalisation illustrée, le crochet 20 est solidaire d'un chariot 21 (cf. fig.4) monté mobile en translation à l'intérieur de la poutre 6, creuse dans ce cas et présentant de préférence une section rectangulaire, entre deux positions extrêmes pourvues de butées de fin de course. Ces dernières peuvent être définies par exemple par les extrémités opposées d'une fente formée sur la face inférieure 60 de la poutre 6 et à travers laquelle le crochet 20 est engagé lorsqu'il est relié au chariot 21.

D'autre part, dans la variante de réalisation illustrée, le mât 4 est télescopique et comporte un tronçon supérieur 42 agencé pour coulisser par rapport à un tronçon inférieur 43, de préférence au moyen d'un vérin 24 logé dans le tronçon inférieur 43 et actionné au moyen d'un moteur relié à des moyens d'alimentation. Le moteur pourra de préférence tourner à deux vitesses montantes et deux vitesses descendantes, de manière à permettre un ralentissement lors des phases terminales de montée ou de descente et par conséquent une approche au millimètre près de la position souhaitée. Il est à noter qu'une telle caractéristique permet aussi bien de prévoir un réglage de la hauteur de la poutre 6 par rapport à la barre 8 lorsque celle-ci est solidaire du mât 4, qu'un réglage de la hauteur de la barre 8 par rapport au sol, lorsqu'elle est suspendue à la poutre 6 au moyen d'une sangle et qu'elle est désolidarisée du mât 4. Ce réglage peut s'effectuer de préférence au moyen d'une télécommande que l'opérateur peut aisément manipuler d'une main, tandis que de l'autre il manipule une vitre, mais également par commande vocale laissant ainsi les deux mains libres.

Par ailleurs, dans une optique de stockage du dispositif 1 selon l'invention, la poutre 6 est montée pivotante sur l'extrémité supérieure 41 du mât 4, autour d'un axe A perpendiculaire à l'axe X du mât 4. Grâce à une telle structure, la poutre 6 est mobile entre une position déployée d'utilisation dans laquelle son axe est perpendiculaire à l'axe X du mât 4 et une position rabattue de rangement dans laquelle son axe est parallèle à celui du mât 4 et elle est située contre ce dernier au-dessus de la partie 54 de la plaque 5.

Bien que dans un objectif de solidité la plaque 5 présente préférentiellement une structure monobloc, il peut le cas échéant être prévu, dans le même but de réduire l'encombrement du dispositif 1 lors de son stockage, que la plaque 5 soit réalisée en deux tronçons 53, 54, comportant des moyens d'emboîtement complémentaire, ou reliés par une charnière.

En référence à la figure 1, dans la variante de réalisation illustrée, les tronçons 53, 54 sont emboîtés. Le mât 4 est solidaire du tronçon 53, tandis que le tronçon 54 est destiné, lors de l'utilisation du dispositif 1 à accueillir un pneu 3 de véhicule 2 et peut comporter, le cas échéant, sur une face supérieure 56, une pluralité de motifs en relief (non illustrés) pour améliorer le contact entre la plaque 5 et le pneu 3. Dans la position d'utilisation du dispositif 1 illustrée aux figures, les tronçons 53, 54 sont emboîtés et positionnés dans le même plan.

Dans la position de rangement du dispositif 1, le tronçon 54 peut être désolidarisé du tronçon 53, et par exemple placé en position verticale contre l'extrémité inférieure 40 du mât 4, en vue d'un gain d'encombrement au sol. Par ailleurs, le tronçon 54 peut également avantageusement être pourvu d'une lumière 52 permettant lors du stockage d'accueillir la paroi latérale libre 102 de la seconde platine 10 reliée à la barre 8 comme il sera expliqué ci-dessous, le tronçon 54 demeurant alors emboîté dans le tronçon 53 et aligné avec ce dernier (cf. fig. 7).

Pour la mise en œuvre du dispositif 1 selon l'invention en vue du montage d'une vitre d'un véhicule automobile telle que par exemple un pare-brise, le technicien en charge des opérations doit d'abord procéder à l'installation du matériel. A cet effet, il positionne le dispositif 1, le cas échéant encore situé dans sa position de rangement illustrée à la figure 7 à proximité d'un véhicule. Puis, il libère la barre 8 portant les ventouses 7 en extrayant la paroi latérale 102 de la seconde platine 10 de la lumière 52 que comporte la plaque 5. Il fait ensuite pivoter la poutre 6 rabattue contre le mât 4 vers sa position d'utilisation dans laquelle elle est perpendiculaire au mât 4 et s'étend dans une direction opposée à celle de la plaque 5. La poutre 6 est bloquée dans cette position par des moyens appropriés, et sa hauteur peut être réglée de manière automatisée grâce à l'actionnement, de préférence au moyen d'une télécommande, du vérin 24 permettant un réglage précis de la longueur du mât 4 en sélectionnant en fin de course une vitesse d'approche appropriée.

La phase suivante consiste à positionner convenablement le véhicule concerné par rapport au dispositif 1 de sorte que l'un de ses pneus soit en appui sur le tronçon 54 de la plaque 5, entre les bourrelets 50a, 50b, et 51a, 51b, afin de bloquer le dispositif 1 en place solidement.

L'opérateur positionne ensuite les ventouses 7 reliées à la barre 8 demeurée jusque-là désolidarisée du mât 4 sur la face externe d'une vitre telle qu'un pare-brise qu'il s'apprête à monter sur un véhicule et se trouvant par exemple posé sur une palette à proximité immédiate du lieu d'intervention. A cet effet, les ventouses 7 peuvent être inclinées de manière adéquate par rotation de la tige définissant les bras 14, 15 autour de l'axe Y1 ou par rotation du manchon 11 autour de la barre 8 et/ou par rotation du manchon 11 autour de la barre 8.

Le cas échéant, la barre 8 est ensuite solidarisée à la poutre 6, dont la hauteur a été préalablement réglée de manière appropriée, au moyen d'une sangle reliée à la fois à l'œillet 19 et au crochet 20. Le pare-brise peut ainsi être aisément manipulé et convenablement orienté par l'opérateur, son poids étant à ce stade supporté par la potence du dispositif 1.

Puis, le technicien procède à la solidarisation de la barre 8 sur le mât 4 par accrochage de la seconde platine 10 sur la première platine 9. A ce stade, il peut éventuellement détacher la sangle reliée au crochet 20 de l'œillet 19.

Si nécessaire, il place ensuite les quatre ventouses 7, en leur faisant subir une translation le long de la barre 8 et/ou une rotation autour de l'axe de la barre 8, de manière telle qu'elles s'étendent entre la barre 8 et la poutre 6 (cf. figure 2) et à une distance convenable entre les extrémités de la barre 8. Le cas échéant, un ruban de colle peut alors être apposé directement sur le cadre délimitant, sur le véhicule, l'ouverture dans laquelle la vitre doit être montée ou sur le pourtour de la face interne de ladite vitre.

A cet effet, de manière à avoir accès à la face interne du pare-brise, l'opérateur réalise si nécessaire un retournement de ce dernier, en faisant pivoter les ventouses 7 autour de la barre 8, après avoir extrait le doigt d'indexage 80 du manchon 11 de l'orifice 18 dans lequel il était introduit. Lorsque la position adéquate du pare-brise est atteinte, le doigt d'indexage est réintroduit dans un autre orifice 18 de la barre 8 pour bloquer les ventouses 7 en position par rapport à ce dernier. A ce stade, l'opérateur a également la possibilité de placer le pare-brise dans une position dans laquelle il lui est possible de déposer le ruban de colle de manière telle que le raccord entre les deux extrémités du ruban se situe sur le bord inférieur du pare-brise, ce qui permet d'éviter tout éventuel problème d'étanchéité après la pose du pare-brise. Pour ce faire, il lui suffit de faire pivoter les ventouses 7 autour de l'axe Z jusqu'à ce que le pare-brise soit placé dans une position dans laquelle son bord inférieur est sensiblement perpendiculaire à l'axe Y de la barre 8 et est situé vis à vis du mât 4.

Ensuite, après avoir déposé le ruban de colle, le technicien procède à nouveau à un retournement de la vitre, la barre 8 étant toujours solidaire du mât 4, en faisant pivoter les ventouses 7 via le manchon 11 autour de l'axe Y de la barre 8, et/ ou via le plot cylindrique 13 autour de l'axe Z perpendiculaire à l'axe Y, jusqu'à ce que la vitre soit positionnée d'une manière adéquate et que l'œillet 19 que comporte le manchon 11 soit facilement accessible.

Au moyen de la sangle entretemps à nouveau reliée au crochet 20 et à l'œillet 19, le technicien accroche ensuite la barre 8 sur la poutre 6, dont la hauteur a préalablement été à nouveau réglée, le cas échéant, pour éviter des efforts inutiles pour le technicien. Ce dernier désolidarise ensuite la barre 8 du mât 4.

Une fois libérée, la barre 8 supportant la vitre, et suspendue à la poutre 6 au moyen de la sangle, est amenée par le technicien vers une direction dans laquelle elle s'étend au-dessus de la plaque 5, par rotation de la poutre 6 autour de l'axe X du mât 4. La vitre est ainsi progressivement guidée jusqu'à se trouver au-dessus de l'ouverture du véhicule dans laquelle elle doit être installée. Lors de cette phase, l'orientation et le positionnement de la vitre sont adaptés au fur et à mesure, le cas échéant par pivotement des ventouses 7 autour des deux axes Y, Z, par déplacement du chariot mobile 21 le long de la poutre 6 et en utilisant le jeu permis par la sangle reliant la barre 8 à la poutre 6.

Puis la barre 8 est abaissée en direction de l'ouverture que comporte le véhicule par réglage automatique de la hauteur du mât 4, donc de la poutre 6, au moyen du vérin 24. La vitre peut être appliquée sur le cadre bordant ladite ouverture et fixée contre ce dernier au moyen du ruban de colle préalablement déposé le long du bord de la vitre ou dudit cadre.

Les ventouses 7 sont ensuite désolidarisées de la face externe de la vitre, et la sangle retirée de l'œillet 19. Le technicien peut ensuite procéder au rangement de son matériel en replaçant le dispositif 1 dans sa position de rangement illustrée à la figure 7. Selon une autre alternative, il est également possible de stocker la barre 8 supportant les ventouses 7 indépendamment du mât 4 supporté par la plaque 5. Cette dernière peut alors avantageusement être démontée lorsqu'elle est constituée de deux tronçons 53, 54 emboîtables, ou placée dans la position dans laquelle les deux tronçons 53, 54 forment un angle droit l'un par rapport à l'autre, l'un des tronçons étant rabattu contre le mât 4.

Il convient de noter que d'autres variantes de réalisation que celles qui viennent d'être décrites peuvent être prévues pour les différents éléments constitutifs du dispositif selon l'invention.

Ainsi, par exemple dans la variante de réalisation illustrée aux figures 10 et 11, les ventouses 7 du dispositif 1 selon l'invention sont reliées à la barre 8 au moyen d'un manchon 110 d'axe Z perpendiculaire à l'axe Y de la barre 8, monté à la fois en rotation à 360° et en translation autour et le long de l'axe Y, et apte à être bloqué en position par rapport à la barre 8, au moyen d'un doigt d'indexage 800 destiné à coopérer avec un trou choisi parmi la pluralité de trous 18 s'étendant le long et autour de la barre 8.

Un disque 130 solidaire des ventouses 7 est monté en rotation à 360° autour de l'axe Z du manchon 110 et peut être bloqué en différentes positions, par exemple au moyen d'un doigt d'indexage 810 coopérant avec un trou 820 d'une série de trous d'axe parallèle à l'axe Z formés dans une face du manchon 130 et répartis autour de la périphérie de cette dernière. Par ailleurs, le disque 130 porte un fer plat s'étendant perpendiculairement à l'axe du manchon 110, et dont les extrémités libres forment des bras 140, 150 portant respectivement une paire de ventouses 7 s'étendant chacune de part et d'autre d'une tige 16, 17, perpendiculaire à l'axe des bras 140, 150.

Ainsi, de manière similaire à ce qui a été décrit précédemment pour la variante de réalisation illustrée aux figures 1 à 5 et 7, les ventouses 7 portées par la barre 8 peuvent être déplacées en translation le long de la barre 8, en suivant le mouvement de translation du manchon 110, notamment en vue d'être placées sur la barre 8 de manière adaptée à la taille de la vitre à manipuler et du véhicule concerné. Par ailleurs, elles peuvent être déplacées en rotation à 360° autour de l'axe Z du manchon 110, perpendiculaire à l'axe Y de la barre 8, en suivant le mouvement de rotation du disque 130.

Par ailleurs, le manchon 110 comporte, sur une face opposée à celle sur laquelle le disque 130 est monté en rotation, un œillet 19, s'étendant dans un plan parallèle à l'axe Z, permettant la solidarisation de la barre 8 avec la poutre 6 au moyen d'une sangle fixée au crochet 20 de cette dernière. Le manchon 110 comporte un œillet supplémentaire 190 s'étendant dans un plan perpendiculaire à l'axe Z depuis sa paroi périphérique, et permettant également de relier la barre 8 à la poutre 6 au moyen d'une sangle. La présence de cet œillet 190 permet avantageusement à un opérateur d'incliner à sa guise les ventouses 7, sans avoir à procéder à un déverrouillage préalable de moyens empêchant sa rotation.

## Revendications

1. Dispositif (1) pour la pose ou la dépose d'une vitre d'un véhicule automobile, telle qu'un pare-brise, comportant d'une part une potence formée par un mât (4) dont l'extrémité inférieure (40) est fixée sur un socle (5) tandis que l'extrémité supérieure (41) est solidaire d'une poutre (6) rotative autour de l'axe (X) dudit mât (4) et d'autre part un ensemble de ventouses (7) solidaires d'une barre (8) ainsi que des moyens pour suspendre ladite barre (8) à ladite poutre (6) et des moyens de réglage en hauteur de ladite barre (8) suspendue à ladite poutre (6), **caractérisé en ce qu'**il comporte des moyens de solidarisation temporaire de ladite barre (8) audit mât (4) et **en ce que** lesdites ventouses (7) sont montées en rotation sur ladite barre (8) autour de l'axe (Y) de ladite barre (8) et autour d'un axe (Z) perpendiculaire à l'axe (Y) de ladite barre (8).

2. Dispositif (1) selon la revendication 1, **caractérisé en ce que** les moyens de solidarisation de ladite barre (8) audit mât (4) comportent une première platine (9) en « U » présentant une paroi avant (90) et deux parois latérales (91) fixées audit mât (4) de manière à ménager un espace e entre ladite paroi avant (90) et ledit mât (4), et une seconde platine (10) en « U » présentant une paroi supérieure (100) et deux parois latérales (101, 102) dont une (101) est fixée à une extrémité de ladite barre (8), la face interne de la paroi avant (90) de la première platine (9) et la paroi latérale libre (102) de la seconde platine (10) étant pourvues de moyens d'emboîtement complémentaires.

3. Dispositif (1) selon l'une quelconque des revendications 1 ou 2, **caractérisé en ce que** ladite barre (8) est équipée d'un manchon en « T » (11) monté en rotation autour de l'axe (Y) de la barre (8), ledit manchon en « T » (11) comportant une branche (12) d'axe (Z) sur laquelle est montée en rotation un plot cylindrique (13) pourvu de deux bras coaxiaux (14, 15), perpendiculaires à l'axe (Z) de la branche (12), l'extrémité libre de chacun des bras (14, 15) portant une paire de ventouses (7) s'étendant chacune de part et d'autre d'une tige (16, 17) perpendiculaire à l'axe desdits bras (14, 15).

4. Dispositif (1) selon la revendication 3, **caractérisé en ce que** ledit manchon en « T » (11) et ladite barre (8) comportent des moyens pour déplacer ledit manchon (11) en translation le long de ladite barre (8) et le bloquer en position à un emplacement donné.

5. Dispositif (1) selon l'une quelconque des revendications 3 ou 4, **caractérisé en ce que** lesdits moyens pour suspendre ladite barre (8) à ladite poutre (6) comportent un œillet (19) solidaire dudit manchon en « T » (11)s'étendant dans l'axe (Z) de ladite branche (12), un crochet (20) solidaire d'une face inférieure (60) de ladite poutre (6) et une sangle destinée à être reliée au crochet (20) et à l'œillet (19).

6. Dispositif (1) selon la revendication 5, **caractérisé en ce que** ledit crochet (20) est solidaire d'un chariot (21) mobile en translation le long de ladite poutre (6) entre deux positions extrêmes délimitées par des butées de fin de course.

7. Dispositif (1) selon l'une quelconque des revendications précédentes, **caractérisé en ce que** ledit mât (4) est télescopique et comporte un tronçon supérieur (42) agencé pour coulisser par rapport à un tronçon inférieur (43), et **en ce que** lesdits moyens de réglage en hauteur de ladite barre (8) suspendue à ladite poutre (6) sont définis par des moyens de réglage de la position dudit tronçon supérieur (42) par rapport audit tronçon inférieur (43) dudit mât (4).

8. Dispositif (1) selon la revendication 7, **caractérisé en ce que** lesdits moyens de réglage comportent un vérin (24) logé dans ledit tronçon inférieur (43) dudit mât (4) et actionné au moyen d'un moteur relié à des moyens d'alimentation.

9. Dispositif (1) selon l'une quelconque des revendications précédentes, **caractérisé en ce que** ladite poutre (6) est montée pivotante sur l'extrémité supérieure (41) dudit mât (4) entre une position déployée d'utilisation dans laquelle son axe est perpendiculaire à l'axe (X) dudit mât (4) et une position rabattue de rangement dans laquelle son axe est parallèle à celui dudit mât (4).

10. Dispositif (1) selon l'une quelconque des revendications précédentes, **caractérisé en ce que** ledit socle est défini par une plaque (5) dont deux bords opposés (50, 51) comportent des moyens pour caler un pneu de véhicule automobile.

11. Dispositif (1) selon la revendication 10 **caractérisé en ce que** ladite plaque (5) est réalisée en deux parties (53, 54) agencées pour adopter l'une par rapport à l'autre une position déployée d'utilisation dans laquelle elles se situent dans le même plan et une position rabattue de rangement dans laquelle elles forment entre elles un angle droit.

## Patentansprüche

1. Vorrichtung (1) zum Einsetzen oder Ausbauen einer Scheibe eines Kraftfahrzeugs, beispielsweise einer Windschutzscheibe, umfassend einerseits einen von einem Mast (4) gebildeten Ausleger, dessen unteres Ende (40) an einem Sockel (5) befestigt ist, während das obere Ende (41) mit einem Träger (6) fest verbunden ist, der sich um die Achse (X) des Mastes (4) dreht, und andererseits einen Satz Saugnäpfe (7), die mit einer Stange (8) fest verbunden sind, sowie Mittel zum Aufhängen der Stange (8) an dem Träger (6) und Mittel zum Einstellen der Höhe der Stange (8), die an dem Träger (6) aufgehängt ist, **dadurch gekennzeichnet, dass** sie Mittel zum vorübergehenden Befestigen der Stange (8) an dem Mast (4) umfasst und dadurch, dass die Saugnäpfe (7) an der Stange (8) um die Achse (Y) der Stange (8) und um eine Achse (Z) senkrecht zur Achse (Y) der Stange (8) drehend montiert sind.

2. Vorrichtung (1) nach Anspruch 1, **dadurch gekennzeichnet, dass** die Mittel zum Verbinden der Stange (8) mit dem Mast (4) eine erste "U"-förmige Platte (9) umfassen, die eine Vorderwand (90) und zwei Seitenwände (91) aufweist, die derart an dem Mast (4) befestigt sind, dass ein Raum e zwischen der Vorderwand (90) und dem Mast (4) entsteht, und eine zweite "U"-förmige Platte (10), die eine obere Wand (100) und zwei Seitenwänden (101, 102) aufweist, von denen eine (101) an einem Ende der Stange (8) befestigt ist, wobei die Innenfläche der Vorderwand (90) der ersten Platte (9) und die freie Seitenwand (102) der zweiten Platte (10) mit komplementären Einpassmitteln versehen sind.

3. Vorrichtung (1) nach einem der Ansprüche 1 oder 2, **dadurch gekennzeichnet, dass** die Stange (8) mit einer "T"-förmigen Hülse (11) ausgestattet ist, die um die Achse (Y) der Stange (8) drehend montiert ist, wobei die "T"-förmige Hülse (11) einen Schenkel (12) der Achse (Z) umfasst, auf dem ein zylindrischer Zapfen (13) drehend montiert ist, der mit zwei koaxialen Armen (14, 15) senkrecht zur Achse (Z) des Schenkels (12) versehen ist, wobei das freie Ende jedes der Arme (14, 15) ein Paar Saugnäpfe (7) trägt, die sich jeweils zu beiden Seiten eines Stegs (16, 17) senkrecht zur Achse der Arme (14, 15) erstrecken.

4. Vorrichtung (1) nach Anspruch 3, **dadurch gekennzeichnet, dass** die "T"-förmige Hülse (11) und die Stange (8) Mittel umfassen, um die Hülse (11) in einer Translation entlang der Stange (8) zu bewegen und in einer bestimmten Position zu blockieren.

5. Vorrichtung (1) nach einem der Ansprüche 3 oder 4, **dadurch gekennzeichnet, dass** die Mittel zum Aufhängen der Stange (8) an dem Träger (6) eine Öse (19), die mit der "T"-förmigen Hülse (11) fest verbunden ist und sich in die Achse (Z) des Schenkels (12) erstreckt, einen Haken (20), der mit einer Unterseite (60) des Trägers (6) fest verbunden ist, und einen Riemen, der dazu bestimmt ist, mit dem Haken (20) und mit der Öse (19) verbunden zu werden, umfassen.

6. Vorrichtung (1) nach Anspruch 5, **dadurch gekennzeichnet, dass** der Haken (20) mit einem Schlitten (21) fest verbunden ist, der in einer Translation entlang des Trägers (6) zwischen zwei durch Endlagenanschläge begrenzten Außenpositionen beweglich ist.

7. Vorrichtung (1) nach einem der vorhergehenden Ansprüche, **dadurch gekennzeichnet, dass** der Mast (4) ausziehbar ist und einen oberen Abschnitt (42) umfasst, der so angeordnet ist, dass er relativ zu einem unteren Abschnitt (43) gleitet, und dass die Mittel zum Einstellen der Höhe der Stange (8), die an dem Träger (6) aufgehängt ist, durch Mittel zum Einstellen der Position des oberen Abschnitts (42) relativ zum unteren Abschnitt (43) des Mastes (4) definiert sind.

8. Vorrichtung (1) nach Anspruch 7, **dadurch gekennzeichnet, dass** die Einstellmittel einen im unteren Abschnitt (43) des Mastes (4) untergebrachten und durch einen mit Versorgungsmitteln verbundenen Motor betätigten Heber (24) umfassen.

9. Vorrichtung (1) nach einem der vorhergehenden Ansprüche, **dadurch gekennzeichnet, dass** der Träger (6) am oberen Ende (41) des Mastes (4) zwischen einer ausgefahrenen Gebrauchsstellung, in der seine Achse senkrecht zu der Achse (X) des Mastes (4) steht, und einer eingefahrenen Aufbewahrungsposition, in der seine Achse parallel zu der des Mastes (4) ist, schwenkbar montiert ist.

10. Vorrichtung (1) nach einem der vorhergehenden Ansprüche, **dadurch gekennzeichnet, dass** der Sockel durch eine Auflage (5) gebildet ist, deren zwei gegenüberliegende Kanten (50, 51) Mittel zum Verkeilen eines Kraftfahrzeugreifens umfassen.

11. Vorrichtung (1) nach Anspruch 10, **dadurch gekennzeichnet, dass** die Auflage (5) aus zwei Teilen (53, 54) besteht, die so angeordnet sind, dass sie zueinander eine ausgefahrene Gebrauchsposition, in der sie sich in derselben Ebene befinden, und eine eingefahrene Aufbewahrungsposition, in der sie einen rechten Winkel zwischen sich bilden, einnehmen.

## Claims

1. Device (1) for fitting or removing a window of a motor vehicle, such as a windshield, comprising, on the one hand, a bracket formed by a mast (4) of which the lower end (40) is fixed to a base (5) while the upper end (41) is secured to a beam (6) which rotates about the axis (X) of said mast (4) and, on the other hand, a set of suction cups (7) secured to a bar (8) as well as means for suspending said bar (8) from said beam (6) and means for adjusting the height of said bar (8) suspended from said beam (6), **characterized in that** it comprises means for temporarily securing said bar (8) to said mast (4) and **in that** said suction cups (7) are rotatably mounted on said bar (8) about the axis (Y) of said bar (8) and about an axis (Z) perpendicular to the axis (Y) of said bar (8).

2. Device (1) according to claim 1, **characterized in that** the means for securing said bar (8) to said mast (4) comprise a first "U"-shaped plate (9) having a front wall (90) and two side walls (91) fixed to said mast (4) so as to provide a space e between said front wall (90) and said mast (4), and a second "U"-shaped plate (10) having an upper wall (100) and two side walls (101, 102) of which one (101) is fixed to one end of said bar (8), the inner face of the front wall (90) of the first plate (9) and the free side wall (102) of the second plate (10) being provided with complementary interlocking means.

3. Device (1) according to either claim 1 or claim 2, **characterized in that** said bar (8) is equipped with a "T"-shaped sleeve (11) rotatably mounted about the axis (Y) of the bar (8), said "T"-shaped sleeve (11) comprising a branch (12) with an axis (Z) on which is rotatably mounted a cylindrical stud (13) provided with two coaxial arms (14, 15) which are perpendicular to the axis (Z) of the branch (12), the free end of each of the arms (14, 15) carrying a pair of suction cups (7) each extending on either side of a rod (16, 17) perpendicular to the axis of said arms (14, 15).

4. Device (1) according to claim 3, **characterized in that** said "T"-shaped sleeve (11) and said bar (8) comprise means for moving said sleeve (11) in translation along said bar (8) and locking it in position at a given location.

5. Device (1) according to either claim 3 or claim 4, **characterized in that** said means for suspending said bar (8) from said beam (6) comprise an eyelet (19) which is secured to said "T"-shaped sleeve (11) and extends in the axis (Z) of said branch (12), a hook (20) which is secured to a lower face (60) of said beam (6) and a strap which is intended to be connected to the hook (20) and to the eyelet (19).

6. Device (1) according to claim 5, **characterized in that** said hook (20) is secured to a carriage (21) which is movable in translation along said beam (6) between two extreme positions delimited by end-of-travel stops.

7. Device (1) according to any of the preceding claims, **characterized in that** said mast (4) is telescopic and comprises an upper portion (42) arranged so as to slide relative to a lower portion (43), and **in that** said means for adjusting the height of said bar (8) suspended from said beam (6) are defined by means for adjusting the position of said upper portion (42) relative to said lower portion (43) of said mast (4).

8. Device (1) according to claim 7, **characterized in that** said adjustment means comprise a jack (24) which is housed in said lower portion (43) of said mast (4) and is actuated by means of a motor connected to supply means.

9. Device (1) according to any of the preceding claims, **characterized in that** said beam (6) is pivotally mounted on the upper end (41) of said mast (4) between an unfolded use position in which its axis is perpendicular to the axis (X) of said mast (4) and a folded storage position in which its axis is parallel to that of said mast (4).

10. Device (1) according to any of the preceding claims, **characterized in that** said base is defined by a plate (5) of which two opposite edges (50, 51) comprise means for wedging a motor vehicle tire.

11. Device (1) according to claim 10, **characterized in that** said plate (5) is made in two parts (53, 54) which are arranged so as to adopt, with respect to each other, an unfolded use position in which they lie in the same plane and a folded storage position in which they form a right angle therebetween.
